# EUROPÄISCHE PATENTANMELDUNG

(11) **EP 4 552 756 A1**
(43) Veröffentlichungstag der Anmeldung: **14.05.2025**
(21) Anmeldenummer: 24206844.3
(22) Anmeldetag: 16.10.2024
(51) Int. Cl.: B07C 5/36, B25J 9/00, B25J 9/16

(54) **VERFAHREN ZUM UMVERTEILEN VON PACKSTÜCKEN IN EINER SORTIERSTATION**

(30) Priorität: 09.11.2023 DE 102023131146
(71) Anmelder: Deutsche Post AG, 53113 Bonn (DE)
(72) Erfinder: LANGER, Frank, 53844 Troisdorf (DE); SCHAFFRINSKI, Lukas Albert, 41468 Neuss (DE)
(74) Vertreter: Cohausz & Florack

(57) **Zusammenfassung**

Beschrieben und dargestellt ist ein Verfahren zum Umverteilen von Packstücken (2) in einer Sortierstation (1), bei dem die Packstücke (2) wenigstens in einer Transportreihenfolge (4) nacheinander an eine Scanneinrichtung (7) transportiert und zur Erfassung jeweils wenigstens eines Größenmaßes und jeweils wenigstens eines Sortierparameters nacheinander gemäß der wenigstens einen Transportreihenfolge (4) gescannt werden, bei dem die gescannten Packstücke (2) anhand des wenigstens einen Sortierparameters sortiert und in wenigstens zwei parallele Sortierreihenfolgen (10) von Packstücken (2) aufgeteilt und nacheinander gemäß den Sortierreihenfolgen (10) mit wenigstens einem Roboter (11) in unterschiedliche Transporteinheiten (12) verladen werden und mit den Transporteinheiten (12) aus der Sortierstation (1) abtransportiert werden, bei dem eine Steuereinrichtung (6) wenigstens zwei parallele, optimierte theoretische Sortierreihenfolgen (10) ermittelt werden, bei dem nur einzelne Packstücke (2) aus der Transportreihenfolge (4) und/oder den Sortierreihenfolgen (10) ausgeschleust und zur Bildung der durch die Steuereinrichtung (8) ermittelten, optimierten Sortierreihenfolgen (10) an anderer Stelle in die Transportreihenfolge (4) und/oder Sortierreihenfolgen (10) wieder eingeschleust werden und bei dem die Packstücke (2) gemäß den optimierten Sortierreihenfolgen (10) vom wenigstens einen Roboter in die Transporteinheiten (12) verladen werden.

## Beschreibung

Die Erfindung betrifft ein Verfahren zum Umverteilen von Packstücken in einer Sortierstation.

Verfahren zum Umverteilen von Packstücken in Sortierstationen sind in unterschiedlichen Ausgestaltungen bekannt. Prinzipiell werden in vielen dieser Verfahren der Sortierstation Packstücke gebündelt in Transporteinheiten zugeführt, bei denen es sich beispielsweise um Aufbauten von Lastkraftwagen oder Anhängern handeln kann. Diese Transporteinheiten werden dann entladen und vereinzelt einem Förderband übergeben. Die Packstücke können dann gescannt werden, wobei ein Sortierparameter erfasst wird, nach dem die Packstücke sortiert werden. Je nach dem Sortierparameter werden die Packstücke dann auf unterschiedliche Transporteinheiten verteilt, mit denen die Packstücke dann aus der Sortierstation abtransportiert werden. In vielen Fällen handelt es sich bei diesen Transporteinheiten, anders als bei den Transporteinheiten, die in der Sortierstation entladen werden, um Rollbehälter, Gitterboxen, Palletten, Paletten mit Wänden oder Unit Load Devices (ULD). Unit Load Devices sind Paletten und Container, die zum Beladen von Flugzeugen verwendet werden und daher an die Abmessungen von Flugzeugrümpfen angepasst sind.

Die Packstücke können nach dem Scannen in einem Zwischenspeicher, etwa einem Regallager oder dergleichen, bis zum Weitertransport der Packstücke zwischengespeichert werden. Aus dem Zwischenspeicher können die Packstücke dann in einer bestimmten oder beliebigen Reihenfolge entnommen werden. Um eine hohe Effizienz und eine geringe Verweilzeit der Packstücke in der Sortierstation zu erreichen, wird aber oft auf das Zwischenspeichern der Packstücke verzichtet. Die Packstücke werden mit Förderbändern oder dergleichen vom Ort des Entladens aus Transporteinheiten zum Ort des Verladens in andere Transporteinheiten gefördert und dabei sortiert. Denkbar ist beispielsweise, dass die Packstücke teilweise von einem Laufband auf ein anderes Laufband oder in eine Rutsche verschoben werden, um die Packstücke zu sortieren. Es gibt dann bedarfsweise eine Transportreihenfolge, in der die Packstücke transportiert, gescannt und einer Sortiereinrichtung zugeführt werden. Nach dem Sortieren bilden die Packstücke wenigstens zwei Sortierreihenfolgen. Jede Sortierreihenfolge enthält typischerweise Packstücke mit einem anderen Sortierparameter. Jede Sortierreihenfolge wird unterschiedlichen Transporteinheiten zugeführt, in welche die Packstücke bedarfsweis von einem Roboter eingebracht werden.

Um den in den Transporteinheiten zur Verfügung stehenden Platz effizient nutzen zu können, werden in einigen Fällen auch Größenmaße der Packstücke erfasst. Ein Beladungsalgorithmus kann dann vorgeben, wo bestimmte Packstücke in die Transporteinheiten gestapelt werden sollten, um wenig Platz zu verschenken. Unterstützend können die aktuellen Beladesituationen der Transporteinheiten mit Sensoren überwacht werden. Werden die Packstücke in der Sortierstation zwischengespeichert, können die Packstücke in einer Reihenfolge aus dem Zwischenspeicher entnommen werden, in der die Packstücke platzsparend gestapelt werden können.

Das Beladen von Transporteinheiten mit sortierten Packstücken in Sortierstationen mit Hilfe von Robotern erreicht trotz der technischen Hilfsmittel keine zufriedenstellende Effizienz. In vielen Fällen ist das händische Verladen schneller und genauer. Das händische Verladen erlaubt jedoch keine Automatisierung. In anderen Fällen wird trotz eines hohen technischen Aufwands beim Verladen noch viel Platz in den Transporteinheiten verschenkt.

Daher liegt der vorliegenden Erfindung die Aufgabe zugrunde, das Verfahren der eingangs genannten und zuvor näher erläuterten Art derart auszugestalten und weiterzubilden, dass die Effizienz von Sortierstationen mit vertretbarem Aufwand weiter gesteigert werden kann.

Diese Aufgabe ist gemäß Anspruch 1 gelöst durch ein Verfahren zum Umverteilen von Packstücken in einer Sortierstation,
- bei dem die Packstücke gebündelt in separaten Transporteinheiten an der Sortierstation angeliefert, in der Sortierstation entladen und wenigstens in einer Transportreihenfolge nacheinander an eine Scanneinrichtung transportiert werden,
- bei dem die Packstücke der wenigstens einen Transportreihenfolge zur Erfassung jeweils wenigstens eines Größenmaßes und jeweils wenigstens eines Sortierparameters nacheinander gemäß der wenigstens einen Transportreihenfolge gescannt werden,
- bei dem die gescannten Packstücke in der wenigstens einen Transportreihenfolge in einer Sortiereinrichtung anhand des wenigstens einen Sortierparameters sortiert und in wenigstens zwei parallele Sortierreihenfolgen von Packstücken aufgeteilt werden,
- bei dem die Packstücke der parallelen Sortierreihenfolgen nacheinander gemäß den Sortierreihenfolgen mit wenigstens einem Roboter in unterschiedliche Transporteinheiten verladen werden und mit den Transporteinheiten aus der Sortierstation abtransportiert werden,
- bei dem eine Steuereinrichtung anhand der wenigstens einen Transportreihenfolge und der wenigstens einen Sortierparameter der Packstücke der wenigstens einen Transportreihenfolge wenigstens zwei parallele, theoretische Sortierreihenfolgen ermittelt,
- bei dem die Steuereinrichtung anhand der theoretischen Sortierreihenfolgen, anhand des wenigstens einen Größenmaßes der Packstücke der theoretischen Sortierreihenfolgen und anhand eines Beladealgorithmus platzsparender nacheinander in die Transporteinheiten zu verladende, optimierte Sortierreihenfolgen ermittelt,
- bei dem nur einzelne Packstücke aus der Transportreihenfolge und/oder den Sortierreihenfolgen ausgeschleust und zur Bildung der durch die Steuereinrichtung ermittelten, optimierten Sortierreihenfolge an anderer Stelle in die Transportreihenfolge und/oder Sortierreihenfolgen wieder eingeschleust werden,
- bei dem die Packstücke gemäß den optimierten Sortierreihenfolgen vom wenigstens einen Roboter in die Transporteinheiten verladen werden.

Verfahrensmäßig werden die Packstücke während des Verteilens der Packstücke zwischen dem Entladen aus den Transporteinheiten und dem Sortieren in der Sortiereinrichtung der Reihe nach in Form einer Transportreihenfolge transportiert, aus der infolge des Sortierens der Packstücke in der Sortiereinrichtung wenigstens zwei Sortierreihenfolgen erzeugt werden. Jede der Sortierreihenfolgen ist zum Verladen in der entsprechenden Reihenfolge in unterschiedliche Transporteinheiten durch einen Roboter vorgesehen. Auf ein Zwischenspeichern der Packstücke wird zur Vermeidung des damit einhergehenden logischen und apparativen Aufwands verzichtet. Es werden jedoch einzelne Packstücke aus der Transportreihenfolge oder wenigstens einer Sortierreihenfolge entnommen, um sie an anderer Stelle, typischerweise aber nicht zwingend weiter hinten, in die Transportreihenfolge oder wenigstens eine Sortierreihenfolge wieder einzuschleusen, um auf diese Weise die Transportreihenfolge oder wenigstens eine Sortierreihenfolge so zu ändern, so dass der Roboter die Packstücke in der dann geänderten Reihenfolge platzsparend in die Transporteinheiten verladen kann. Dem Roboter wird dann vorzugsweise nicht bloß eine Reihenfolge von Packstücken zugeführt, die sich platzsparender verladen lässt als die nicht geänderte Reihenfolge an Packstücken, sondern auch durch eine Steuereinrichtung vorgegeben, wo die jeweiligen Packstücke jeweils in die Transporteinheiten abgelegt werden sollen, damit eine möglichst dichte Packung von Packstücken in den Transporteinheiten erzielt werden kann. Dadurch kann die Effizienz sowohl der Sortierstation als auch des Verfahrens zum Umverteilen von Packstücken in einer Sortierstation gesteigert werden, ohne dass dazu unverhältnismäßige Aufwände erforderlich sind.

Die Packstücke werden an der Sortierstation gebündelt in separaten Transporteinheiten angeliefert, bei denen es sich beispielsweise um Aufbauten von Lastkraftwagen oder Anhängern handeln kann. Die Packstücke sind darin typischerweise gestapelt enthalten und bilden dabei ein Bündel von Packstücken, in dem die Packstücke keine bestimmte Reihenfolge aufweisen. Die Transporteinheiten werden dann in der Sortierstation entladen, wobei das Entladen von mehreren Transporteinheiten nacheinander erfolgen wird. Dies schließt aber nicht aus, dass das Entladen von separaten Transporteinheiten parallel zueinander erfolgen kann. Die Packstücke werden beim Entladen vereinzelt und dabei, etwa von wenigstens einem Förderband, nacheinander in wenigstens einer Transportreihenfolge an einer Scanneinrichtung vorbeigeführt. Die in der wenigstens einen Transporteinrichtung zur Scanneinrichtng transportierten Packstücke werden gescannt, wobei jeweils wenigstens ein Größenmaß und ein Sortierparameter der Packstücke erfasst wird.

Die nachfolgende Sortierung der Packstücke erfolgt dabei auf der Grundlage dieses wenigstens einen Sortierparameters. Der Sortierparameter kann beispielsweise eine Zielinformation enthalten, wohin das jeweilige Packstück zu transportieren ist, etwa eine Postleitzahl oder dergleichen. Beim Sortieren müssen nicht zwingend Packstücke mit gleichen Sortierparametern zusammengefasst werden. Es können auch Packstücke mit Sortierparametern zusammengefasst werden, die in einem vorgegebenen Wertebereich liegen, etwa im Sinne von Postleitzahlbereichen. Durch das Sortieren der Packstücke in der Sortiereinrichtung wird die Transportreihenfolge der Packstücke in wenigstens zwei separate Sortierreihenfolgen von Packstücken aufgeteilt. Je nach der Anzahl an Kriterien, nach denen sortiert wird, ergeben sich beim Sortieren mehr oder weniger separate Sortierreihenfolgen.

Die Packstücke der verschiedenen Sortierreihenfolgen werden in unterschiedliche Transporteinheiten verladen, ohne dabei wieder miteinander vermischt zu werden. Das Verladen der Packstücke einer jeden Sortierreihenfolge erfolgt dabei nacheinander entsprechend der jeweiligen Reihenfolge. Der Roboter verlädt die Packstücke mithin nacheinander in der Reihenfolge, in der die Packstücke gemäß der Sortierreihenfolge an den Roboter herantransportiert werden. Besonders zweckmäßig aber nicht zwingend erforderlich ist es, wenn jede Sortierreihenfolge von Packstücken von einem separaten Roboter in separate Transporteinheiten verladen wird. Die beladenen Transporteinheiten werden aus der Sortierstation abtransportiert. Wenn die Sortierreihenfolge noch weitere nicht verladene Packstücke aufweist, wird die nächste Transporteinheit mit den verbliebenen Packstücken beladen und so weiter.

Das Verfahren zum Umverteilen von Packstücken in der Sortierstation wird von einer Steuereinrichtung gesteuert, der die in der Scanneinrichtung erhobenen Informationen zu Verfügung stehen. Die Steuereinrichtung kennt daher zu jedem Packstück der gescannten Transsportreihenfolge von Packstücken die Anordnung des Packstücks in der Transportreihenfolge von Packstücken. Es ist also bekannt, welche Packstücke in der Transportrichtung vor und nach einem bestimmten Packstück vorgesehen sind. Zudem kennt die Steuereinrichtung zu jedem Packstück das wenigstens eine Größenmaß und den wenigstens einen Sortierparameter. Anhand dieser Daten ermittelt die Steuereinrichtung, die theoretischen Sortierreihenfolgen, die sich ergeben werden, wenn die Packstücke durch die Sortiereinrichtung sortiert worden sind. Für den Fall, dass die Reihenfolge der Packstücke nach dem Scannen und vor dem Sortieren nicht verändert wird, sollten die theoretischen Sortierreihenfolgen den tatsächlichen Sortierreihenfolgen entsprechen.

Die Steuereinrichtung ermittelt anhand der theoretischen Sortierreihenfolgen, der zugehörigen Größenmaße der Packstücke und eines Beladealgorithmus geänderte Sortierreihenfolgen, die sich platzsparender nacheinander in die Transporteinheiten verladen lassen, als die nicht geänderten Sortierreihenfolgen. Es handelt sich mithin bei den geänderten Sortierreihenfolgen um optimierte Sortierreihenfolgen, die auf das platzsparende Verladen optimiert sind. Die optimierten Sortierreihenfolgen müssen dabei kein absolutes Optimum, sondern lediglich eine Verbesserung der unveränderten Sortierreihenfolge darstellen. Der Begriff "optimieren" ist hier grundsätzlich bevorzugt recht allgemein zu verstehen.

Denkbar ist beispielsweise, dass in einer theoretischen Sortierreihenfolge zwei sehr große Packstücke aufeinander folgen, bei deren Verladung nacheinander in der Transporteinheit ein nicht unerheblicher freier, ungenutzter Raum verbleibt. Dann kann es sich anbieten, eines der Packstücke in der Sortierreihenfolge weiter nach hinten zu verschieben. Dann können eventuell nach dem ersten großen Packstück weitere kleine Packstücke in den Zwischenräumen der Transporteinheit angeordnet werden, bevor das andere große Packstück verladen wird. Dabei ist die Frage, ob Packstücke in raumsparender Weise verladen werden können, von den vorher verladenen Packstücken und der sich daraus ergebenden jeweils aktuellen Beladesituation abhängig, welche wenigstens näherungsweise vorab von der Steuereinrichtung berechnet werden kann. Denkbar ist auch, dass es sich anbietet, ein großes Packstück nicht mehr in eine fast volle Transporteinheit zu verladen, sondern als erstes in eine noch unbeladene Transporteinheit. Dann kann das große Packstück entsprechend nach hinten in der optimierten Sortierreihenfolge verschoben werden.

Um die Sortierreihenfolgen zu optimieren, bestehen verfahrensmäßig unterschiedliche Optionen. Gemein ist diesen Optionen, dass bestimmte Packtücke aus einer Reihenfolge von Packstücken ausgeschleust und an einer anderen Stelle in die Reihenfolge von Packstücken wieder eingeschleust werden, womit sich die Reihenfolge der Packstücke ändert, ohne dass alle Packstücke in einem Zwischenspeicher zwischengespeichert werden müssen. Es werden mithin immer nur einzelne Packstücke aus einer Reihe von Packstücken ausgeschleust und nicht etwa alle Packstücke. Da die Steuereinrichtung bereits aus der Transportreihenfolge nach dem Scannen der Packstücke auf die theoretische Sortierreihenfolgen schließen kann, können einzelne Packstücke vor und/oder nach dem Sortieren aus der jeweiligen Reihenfolge, also der Transportreihenfolge und/oder der Sortierreihenfolge, ausgeschleust werden. Die Packstücke können dann grundsätzlich unabhängig davon, aus welcher Reihenfolge sie entnommen worden sind, in die Transportreihenfolge oder die Sortierreihenfolge eingeschleust werden. Der Einfachheit halber wird es sich jedoch anbieten, wenn die aus der Transportrichtung ausgeschleusten Packstücke wieder in die Transportreihenfolge eingeschleust werden und wenn ein aus einer Sortierreihenfolge ausgeschleustes Packstück wieder an anderer Stelle in diese Sortierreihenfolge eingeschleust wird.

Grundsätzlich bietet es sich an, Packstücke aus einer Reihenfolge zu entnehmen und am Ort der Entnahme kurz anzuhalten, bis das ausgeschleuste Packstück von dem Packstück passiert worden ist, hinter dem das Packstück wieder in die Reihenfolge eingeschleust werden soll. Dann ist ein nennenswerter Transport des ausgeschleusten Packstücks vor dem erneuten Einschleusen entbehrlich. Das ausgeschleuste Packstück kann aber auch entgegen oder mit der Transportrichtung der Packstücke transportiert werden, bevor es in der Reihenfolge wieder eingeschleust wird. Dies erlaubt es dann, Packstücke sehr schnell an eine deutlich weiter hinten in der Reigenfolge angeordnete Position oder sehr schnell an eine Position weiter vorne in der Reihenfolge zu bringen, was die Flexibilität und damit die Effizienz des Verfahrens deutlich erhöhen kann.

Wenn die Transportreihenfolge der Packstücke in eine optimierte Transportreihenfolge geändert wird, hat die Steuereinrichtung vorzugsweise bei der Ermittlung der optimierten Transportreihenfolge bereits berücksichtigt, dass anschließend noch eine Sortierung der optimierten Transporteinrichtung erfolgt, und nach welchen Kriterien diese Sortierung erfolgt. Dann steht nämlich fest, welche konkreten, dann optimierten Sortierreihenfolgen sich nach dem Sortieren der optimierten Transportreihenfolge einstellen. Letztlich wird, egal an welcher Stelle die eine Reihenfolge der Packstücke geändert und damit optimiert wird, vor dem wenigstens einen, die Verladung bewirkenden Roboter eine optimierte und keine lediglich zufällige Sortierreihenfolge von Packstücken bereitgestellt. Somit werden die Packstücke gemäß den optimierten Sortierreihenfolgen vom wenigstens einen Roboter in die Transporteinheiten verladen.

Unter Packstücken können grundsätzlich Stückgüter unterschiedlicher Art verstanden werden. Es können aber auch Stückgüter einer besonderen Art gemeint sein, etwa mit Packungen verpackte Waren. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten oder Säcke vorliegen. Die in Packstücken verpackten Waren können selbst einzelne Stückgüter, Schüttgüter, Flüssigkeiten oder pastöse Materialien sein.

Bei einer ersten besonders bevorzugten Ausgestaltung des Verfahrens werden die Packstücke in wenigstens einer vorläufigen Transportreihenfolge gescannt. Es handelt sich dabei um eine vorläufige Transportreihenfolge, weil diese Transportreihenfolge vor dem Sortieren der Transportreihenfolge im Sinne einer platzsparenden Verladung geändert wird. Dazu werden bestimmte, also nur einzelne Packstücke aus der Transportreihenfolge ausgeschleust und an anderer Stelle wieder in die Transportreihenfolge eingeschleust. Auf diese Weise wird unter Vorgabe der Steuereinrichtung eine durch die Steuereinrichtung ermittelte, optimierte Transportreihenfolge erzeugt. Die Packstücke der optimierten Transportreihenfolge werden anschließend in der Sortiereinrichtung anhand des wenigstens einen Sortierparameters in wenigstens zwei, vorzugsweise optimierte, Sortierreihenfolgen sortiert. Die Packstücke können dann in der jeweiligen, optimierten Sortierreihenfolge sehr platzsparend über den wenigstens einen Roboter in die Transporteinheiten verladen werden. Dem Roboter wird eine geeignete Reihenfolge an Packstücken zugeführt, wobei der Roboter die Packstücke nacheinander an jeweils geeigneten Stellen in die Transporteinheiten ablegen kann. Die entsprechenden Stellen können dem Roboter dabei jeweils von der Steuereinrichtung vorgegeben werden. Die Packstücke können je nach Beladungssituation und Packstück nebeneinander und/oder übereinander in der Transporteinheit abgelegt werden.

Alternativ können die Packstücke der Transportreihenfolge in wenigstens einer vorläufigen Transportreihenfolge, insbesondere in der vorläufigen Transportreihenfolge, in der die Packstücke gescannt worden sind, in einer Sortiereinrichtung anhand des wenigstens einen Sortierparameters in wenigstens zwei vorläufige Sortierreihenfolgen sortiert werden. Erst nach dem Sortieren der Packstücke in zwei separate vorläufige Sortierreihenfolgen werden aus diesen einzelne, aber nicht alle Packstücke ausgeschleust und an einer anderen Stelle in der Sortierreihenfolge wieder eingeschleust. So werden durch die Steuereinrichtung ermittelte, optimierte Sortiereinrichtungen gebildet, die einfach und platzsparend über den wenigstens einen Roboter in die Transporteinheiten verladen werden können. Es handelt sich mithin um vorläufige Sortierreihenfolgen, weil diese Sortierreihenfolgen vor dem Verladen der Packstücke aus einer vorläufigen Sortierreihenfolge in eine optimierte Sortierreihenfolge umgewandelt sind. Ein absolutes Optimum an Platzeinsparung wird auch mit der optimierten Sortierreihenfolge nicht unbedingt zu erreichen sein. Der Roboter kann die optimierte Sortierreihenfolge aber platzsparender in die Transporteinheiten verladen als die vorläufige Sortierreihenfolge. Dies gilt jedenfalls nach der Berechnung durch die Steuereinrichtung auf Basis eines Beladealgorithmus oder dergleichen.

Denkbar ist im Übrigen auch, dass die Transportreihenfolge der Packstücke geändert und dann zusätzlich nach dem Sortieren wenigstens eine der Sortierreihenfolgen geändert wird. In vielen Fällen wird dies aufgrund des zusätzlichen Aufwands aber nicht bevorzugt sein.

Um die Sortierreihenfolge in geeigneter Weise optimieren zu können und dabei nicht nur auf die Berechnungen der Steuereinrichtung zurückgreifen zu müssen, bietet es sich an, wenn der aktuelle Beladezustand wenigstens einer Transporteinheit zum Verladen der Packstücke während des Verladens der Packstücke mittels wenigstens eines, insbesondere optischen, Sensors überwacht wird. Die Sortierreihenfolge kann dann immer unter Berücksichtigung des tatsächlichen und nicht lediglich des berechneten Beladezustands der Transporteinheit optimiert werden. Dabei ist es dann nicht von Bedeutung, ob dazu die Transportreihenfolge und/oder wenigstens eine Sortierreihenfolge geändert wird.

Ganz grundsätzlich kann es zweckmäßig sein, wenn der wenigstens eine Größenparameter mittels eines Sechsseiten-Scanners, eines Volumenscanners und/oder eines Linienscanners, insbesondere eines RGB-Linienscanners, gescannt wird. Der Sechsseiten-Scanner scannt die Packstücke jeweils aus allen sechs Raumrichtungen, so dass die tatsächlichen Größenmaße sehr genau erfasst werden können. Je genauer die Abmessungen bekannt sind, umso effektiver können die Sortierreihenfolgen optimiert werden. Entsprechende Scanner der genannten Arten sind prinzipiell aus ähnlichen Anwendungen bekannt.

Ein Sechsseiten-Scanner kann bevorzugt von allen sechs Seiten des Packstücks jeweils ein Bild aufnehmen, wobei sich dann die Pixel der Bilder auswerten lassen. Beispielsweise können die zu einem Packstück gehörigen Pixel gezählt und daraus die Größenabmessungen des Packstücks ermittelt werden, insbesondere wenn zuvor eine Kalibrierung in Bezug auf das Verhältnis von Pixelzahlen und Größenabmessungen erfolgt ist. In einem einfacheren Fall kann auch ein Linienscanner verwendet werden, an dem die Packstücke vorbei transportiert werden. Der Linienscanner scannt dabei eine Seite des Packstücks, etwa von oben, und nimmt dabei zeilenweise Bilder auf. Die Pixel jeder Zeile können dann gegen die Zeit bzw. die Anzahl der Zeilen hintereinander aufgetragen werden, wodurch man Bilder aus einer Vielzahl von einzelnen Zeilen und damit letztlich Pixelflächen erhält, die mit den Größenabmessungen der Packstücke korrelieren. Nach einer entsprechenden Kalibrierung kann die Pixelfläche einer Größe des Packstücks aus der entsprechenden Blickrichtung zugeordnet werden. Besonders bevorzugt sind in diesem Zusammenhang RGB-Scanner, wobei als RGB ein Farbraum bezeichnet wird, der mittels der Farben rot, grün und blau, also den Primärfarben des Lichts, gebildet wird. Vereinfacht gesprochen erfasst der Linienscanner die Farben rot, grün und blau. Im Gegensatz zu den Linienscannern erlauben Sechsseiten-Scanner die Ermittlung eines Volumens oder einer dreidimensionalen Form des Packstücks. Bedarfsweise können aber alternativ oder zusätzlich auch sogenannte Volumenscanner eingesetzt werden, die meist Laser einsetzen. Die Volumenscanner können zudem als Linienscanner ausgebildet sein, an dem die Packstücke dann vorbeitransportiert werden. Der Vorteil dieser Scanner besteht darin, dass aus einer mittels eines entsprechenden Detektors aufgefangenen Punktewolle des Lasers auf die dreidimensionale Form der Packstücke geschlossen werden kann. Typischerweise wird die auf einem Förderband aufliegende Seite eines Packstücks nicht gescannt, was aber regelmäßig in Kauf genommen werden kann. Meist werden die Packstücke von einer Seite, insbesondere wenigstens im Wesentlichen von oben, mit dem Laser beaufschlagt.

Bei der Verwendung eines Sechsseiten-Scanners, eines Volumenscanners, eines Linienscanners, insbesondere RGB-Linienscanners, und/oder anderer geeigneter Scanneinrichtungen bietet es sich an, wenigstens zwei, insbesondere wenigstens drei, Größenparameter von jedem Packstück zu scannen. Bei diesen kann es sich um die Höhe, die Breite und/oder die Länge der Packstücke handeln. In einigen Fällen kann es weiter bevorzugt sein, konkret die maximale Höhe, die maximale Breite und/oder die maximale Länge der Packstücke zu erfassen. Wenn die Abmessungen in mehreren Dimensionen bekannt sind, kann von der Steuereinrichtung zuverlässiger eine tatsächlich platzsparende Verladung berechnet werden. Dies führt zu besser optimierten Sortierreihenfolgen der Packstücke zum Verladen in die Transporteinheiten, was insbesondere dann gilt, wenn die Packstücke sehr unterschiedliche Abmessungen aufweisen können.

Neben dem Scannen von Größenmaßen in Form reiner Abmessungen, kann es sich alternativ oder zusätzlich anbieten, wenn die Form und/oder die Oberfläche der Packstücke gescannt wird. Dies bietet sich insbesondere dann an, wenn die Packstücke nicht oder nicht immer quaderförmig oder sehr dünn oder sehr flexibel sind. Bei nicht quaderförmigen Packstücken kann eine andere relative Anordnung zueinander platzsparender sein als bei in etwa gleichgroßen quaderförmigen Packstücken. Ist der Steuereinrichtung die Form und/oder die Oberfläche der Packstücke bekannt, kann von der Steuereinrichtung anhand der gescannten Form und/oder der Oberfläche der Packstücke ermittelt werden, ob es sich bei der Form um wenigstens eine vorbestimmte Sonderform der Packstücke handelt.

Die Steuereinrichtung kann das Handling der Sonderformen nach anderen Kriterien vorgeben als rein nach den Größenmaßen und den Sortierparametern. Das Scannen einer Oberfläche erfolgt dabei bevorzugt durch Aufnehmen eines Bilds von wenigstens einer Oberfläche. Es kann hier beispielsweise wenigstens ein Bild eines Sechsseiten-Scanners oder wenigstens ein von einem Linienscanner zeilenweise zusammengesetztes Bild der Oberfläche genutzt werden. Eine Auswertung betreffend die Oberfläche kann dann beispielsweise anhand der Farbverläufe oder der Grauwertverteilungen erfolgen.

Beispielsweise kann vorgegeben werden, dass bestimmte Sonderformen aus der Reihenfolge der Packstücke ausgeschleust werden. Die Sonderformen können dann aus der, insbesondere vorläufigen, Transportreihenfolge, und/oder aus der, insbesondere vorläufigen, Sortierreihenfolge ausgeschleust werden. Ein Ausschleusen nach der Sortiereinrichtung erfordert einen längeren Transport in der Sortierstation. Dann ist die Sonderform jedoch nach dem wenigstens einen Sortierparameter sortiert worden, was für den weiteren Umgang mit den Packstücken nützlich sein kann. Die Packstücke mit den Sonderformen können in andere Transporteinheiten verladen werden als die nicht die wenigstens eine Sonderform aufweisenden Packstücke. Es kann sich dabei um separate Transporteinheiten handeln, die lediglich für das Verladen von Sonderformen vorgesehen sind. Alternativ oder zusätzlich können die Sonderformen zum händischen Verladen vorgesehen sein. Das Verladen in Transporteinheiten erfolgt dann nicht über einen Roboter. In diesem Zusammenhang kommen als Sonderformen beispielsweise solche in Frage, die nicht oder nur schwer von einem Roboter gehandhabt bzw. verladen werden können. Der wenigstens eine vorhandene Roboter wird folglich nicht durch solche Packstücke mit Sonderformen blockiert. Packstücke mit Sonderformen erreichen den Roboter erst gar nicht und werden an anderer Stelle händisch verladen.

Grundsätzlich kann es angebracht sein, die Packstücke mit Sonderformen in Transporteinheiten zusammen mit keine Sonderformen aufweisenden Packstücken zu verladen. Bei bestimmten Sonderformen kann es aber dagegen zweckmäßig sein, in separate Transporteinheiten lediglich Sonderformen zu verladen, was bedeuten kann, aber nicht muss, dass in anderen Transporteinheiten ausschließlich Packstücke verladen werden, die keine Sonderform aufweisen. Es kann beispielsweise auch vorgegeben sein, dass die Packstücke mit einer bestimmten Sonderform in einer bestimmen Ausrichtung in die Transporteinheiten verladen werden. Denkbar ist auch, dass einzelne Sonderformen mit anderen Sonderformen besonderes platzsparend in einer vorgegebenen Ausrichtung angrenzend zueinander verladen werden.

Durch das Scannen der Form und/oder der Oberfläche der Packstücke können beispielsweise sehr dünne Packstücke erkannt werden, etwa solche mit einer Höhe zwischen 0,3 cm und 1 cm. Bei solchen Packstücken handelt es sich dann beispielsweise eher nicht um Pakete, sondern eher um Briefumschläge, die bedarfsweise eher bevorzugt in einem oberen Bereich der Transporteinheit in diese verladen werden sollen. Dies kann einen Einfluss auf die bevorzugte Sortierreihenfolge haben. Aus der Form der gescannten Seiten der Packstücke lässt sich bedarfsweise auch ableiten, ob die Packstücke eher steif oder eher flexibel sind. Packstücke ohne gerade Kanten und/oder die keine spitzen Ecken aufweisen, können beispielsweise als Taschen oder Tüten angesehen werden. Auch bei Taschen oder Tüten kann es wünschenswert sein, diese oben in die Transporteinheit zu verladen, um Beschädigungen dieser Packstücke zu vermeiden. Wenn beim Scannen der Oberfläche viele Lichtreflektionen als stellenweise Hell-Dunkel-Kontraste erkannt werden, kann ebenfalls darauf geschlossen werden, dass es sich bei dem Packstück um eine Tasche, eine Tüte oder ein Packstück aus Papier handelt. Da entsprechende Packstücke ebenfalls eher empfindlich gegenüber mechanischen Einwirkungen sind, bietet es sich auch für die Packungen an, oben in einer Transporteinheit verladen zu werden. Es kann sich auch anbieten, die genannten, leichter zu beschädigenden Packstücke in einer separaten Sortierreihenfolge zu sortieren, um sie separat von anderen Arten von Packstücken in separaten Transporteinheiten zu sortieren. Sehr dünne und/oder flexible Packstücke können auch durch "Machine Learning" als solche erkannt werden, wobei der Scanner durch reale Packstücke angelernt wird, ähnliche automatisch zu erkennen. So lässt sich dann beispielsweise automatisch und sehr zuverlässig zwischen Tüten, Paketen und Umschlägen unterscheiden, die dann jeweils in einer anderen, bevorzugten Weise gehandhabt bzw. jeweils separat in andere Transporteinheiten verladen werden.

Ist der Steuereinrichtung die Form und/oder Oberfläche der Packstücke bzw. die Art der Packstücke bekannt, kann von der Steuereinrichtung festgelegt werden, ob die jeweiligen Packstücke von dem Roboter gehandhabt werden können. Dazu kann die Steuereinrichtung die Form und/oder Oberfläche der Packstücke mit den als vom wenigstens einen Roboter handhabbar in der Steuereinrichtung hinterlegten Formen vergleichen. Wenn die Formen und/oder Oberflächen der Packstücke von einem Roboter wahrscheinlich nicht gehandhabt werden können, können die Packstücke beispielsweise aussortiert werden, um von Hand oder dergleichen verladen zu werden.

Um möglichst wenig Platz in den Transporteinheiten zu verschenken, kann es sich anbieten, wenn von der Steuereinrichtung aus der gescannten Form und/oder Oberfläche der Packstücke elektronische 3D-Modelle der Packstücke erzeugt werden. Dies ist insbesondere dann der Fall, wenn die Formen der Packstücke in vielen Fällen sehr unterschiedlich und nicht quaderförmig oder dergleichen sind. Die Steuereinrichtung kann dann auch anhand der elektronischen 3D-Modelle der Packstücke platzsparende, nacheinander in die Transporteinheiten zu verladende optimierte Sortierreihenfolgen ermitteln. Der Beladealgorithmus kann dann die jeweilige 3D-Form sehr realitätsnah und exakt berücksichtigen, um eine optimierte Sortierreihenfolge zu ermitteln.

Alternativ oder zusätzlich kann die Steuereinrichtung aus der gescannten Form und/oder der Oberfläche der Packstücke auf Artikelklassen der Packstücke schließen, die zuvor entsprechend in Abhängigkeit der Form und/oder der Oberfläche definiert worden sind. Oft kann nämlich anhand der Form und/oder der Oberfläche von Packstücken entschieden werden, um welche Art Packstücke es sich handelt und durch welche Eigenschaften sich die Packstücke auszeichnen. Beispielsweise haben Tüten, Umschläge und Taschen meist charakteristische Formen und/oder Oberflächen und zeichnen sich zudem dadurch aus, dass sie recht flexibel sind, was einen Einfluss darauf haben kann wo und zusammen mit welchen anderen Packstücken diese Packstücke zweckmäßig in Transporteinheiten verladen werden können. Das Erkennen bestimmter Artikelarten kann noch verbessert werden, wenn zusätzlich das Gewicht der Packstücke ermittelt wird, etwa während des Scannens der Packstücke, unmittelbar davor oder unmittelbar danach. Bestimmte Artikelklassen können auch dazu vorgesehen sein, erst ganz oben in den Transporteinheiten oder von Hand in separate Transporteinheiten verladen zu werden, damit die Packstücke nicht durch das Gewicht anderer Packstücke beschädigt werden. Die Steuereinrichtung ermittelt also bedarfsweise auch anhand der Artikelklassen der Packstücke platzsparende, nacheinander in die Transporteinheiten zu verladende, optimierte Sortierreihenfolgen.

Unabhängig von der Ermittlung der Form und/oder der Oberfläche oder aber zusätzlich dazu kann das Gewicht bestimmter Packstücke, vorzugsweise jedes Packstücks, erfasst werden. Dann kann man beispielsweise auf die Art des Packstücks schließen oder vermeiden, dass besonders schwere Pakete ganz oben in die Transporteinheiten oder auf kleine, leichte Packstücke verladen werden, um die darunter befindlichen Packstücke nicht einzudrücken oder anderweitig zu beschädigen. Somit kann die Steuereinrichtung auch anhand des Gewichts der Packstücke platzsparende, nacheinander in die Transporteinheiten zu verladende, optimierte Sortierreihenfolgen ermitteln.

Wenn der Steuereinrichtung schon vor dem Entladen der Transporteinheit Größenmaße und/oder Sortierparameter wenigstens einzelner Packstücke übermittelt werden, kann die Steuereinrichtung schon anfangen, unterschiedliche Beladesituationen durchzurechnen, um möglichst schnell optimierte Sortierreihenfolgen der entsprechenden, noch zu sortierenden Packstücke bestimmen zu können, was abschließend erst erfolgen kann, wenn die tatsächliche, vorläufige Transportreihenfolge der entladenen Packstücke bekannt ist, wobei dann jedem Packstück wenigstens ein Größenmaß und wenigstens ein Sortierparameter zugeordnet ist. Vor dem Entladen der Packstücke sind die zu den Packstücken gehörigen Größenmaße und Sortierparameter beispielsweise bereits bekannt. Wenn die Packstücke schon beim oder vor dem Beladen nach diesen Eigenschaften gescannt worden sind. Dann ist beispielsweise der Steuereinrichtung möglichst bereits vor dem Anliefern der Packstücke in einer Transporteinheit bekannt, welche Packstücke mit der Transporteinheit angeliefert werden. Besonders zweckmäßig kann es sein, um schnelle, möglichst optimale Sortierreihenfolgen der Packstücke zu ermitteln, wenn die vor dem Scannen mitgeteilten Größenmaße und/oder Sortierparameter der wenigstens einzelnen Packstücke mit den gescannten Größenmaßen und/oder Sortierparametern von wenigstens einzelnen Packstücken abgeglichen werden. Die prinzipiell vorbekannten Packstücke werden dann sozusagen wiedererkannt und es lässt sich vermuten, welche Packstücke in welcher Reihenfolge entladen werden. Dementsprechend setzt sich dann vermutlich die vorläufige Transportreihenfolge der entladenen Packstücke zusammen.

Unter Umständen kann es zweckmäßig sein, wenn die Steuereinrichtung anhand der übermittelten Größenmaße und/oder Sortierparameter wenigstens einzelner Packstücke, insbesondere vor dem Entladen der wenigstens einzelnen Packstücke, bereits eine optimierte Sortierreihenfolge der wenigstens einzelnen Packstücke ermittelt. Es kann geschaut werden, ob diese weiter optimiert werden kann und/oder wie man diese optimierte Sortierreichenfolge möglichst einfach und schnell erzeugen kann. Die Steuereinrichtung kann die optimierte Sortierreihenfolge der Packstücke dann nach dem Scannen der Packstücke unter Berücksichtigung der vor dem Scannen der Packstücke anhand der übermittelten Größenmaße und/oder Sortierparameter theoretisch ermittelten optimierten Sortierreihenfolgen ermitteln.

Die Vorteile des beschriebenen Verfahrens können in besonders zweckmäßiger Weise genutzt werden, wenn die Packstücke aus Transporteinheiten in Form von Nutzfahrzeugaufbauten, vorzugsweise Kofferaufbauten, insbesondere eines Lastkraftwagens, Anhängers oder Sattelaufliegers entladen werden. Alternativ oder zusätzlich kann es sich aber auch anbieten, wenn die Packstücke aus Transporteinheiten in Form von nicht selbst angetriebenen Niederflurfahrzeugen, insbesondere in Form von Rollwagen, Gitterboxen oder Unit Load Devices (ULD) entladen werden. Bei entsprechenden Verfahren werden viele große Packstücke in sehr kurzer Zeit verteilt, weshalb eine Optimierung des Platzes in den Transporteinheiten wünschenswert und zugleich schwierig ist.

Alternativ oder zusätzlich ist es aus den gleichen Gründen bevorzugt, wenn die Packstücke in nicht selbst angetriebene Niederflurfahrzeuge, insbesondere in Form von Rollwagen, Gitterboxen oder Unit Load Devices (ULD) verladen werden. Unit Load Devices sind Paletten und Container, die zum Beladen von Flugzeugen verwendet werden und daher an die Abmessungen von Flugzeugrümpfen angepasst sind.

Hinsichtlich der Packstücke bietet sich das beschriebene Verfahren an, wenn die Packstücke umverpackte Stückgüter, insbesondere jeweils mit einem Karton umverpackte Stückgüter sind. Besonders zweckmäßig ist es dabei, wenn die Stückgüter Pakete, Tüten, Umschläge und/oder Taschen sind. Diese Packstücke sind in Sortieranlagen in großer Zahl und bei kurzer Verweilzeit zu sortieren und zu verteilen.

Nachfolgend wird die Erfindung anhand einer lediglich eine Ausführungsform darstellenden Zeichnung näher erläutert. In der Zeichnung zeigt
- Fig. 1: eine Sortierstation zum erfindungsgemäßen Umverteilen von Packstücken in einer Draufsicht von oben und
- Fig. 2: das Verladen von Packstücken einer optimierten Sortierreihenfolge mit einem Roboter der Sortierstation aus Fig. 1 in einer Seitenansicht.

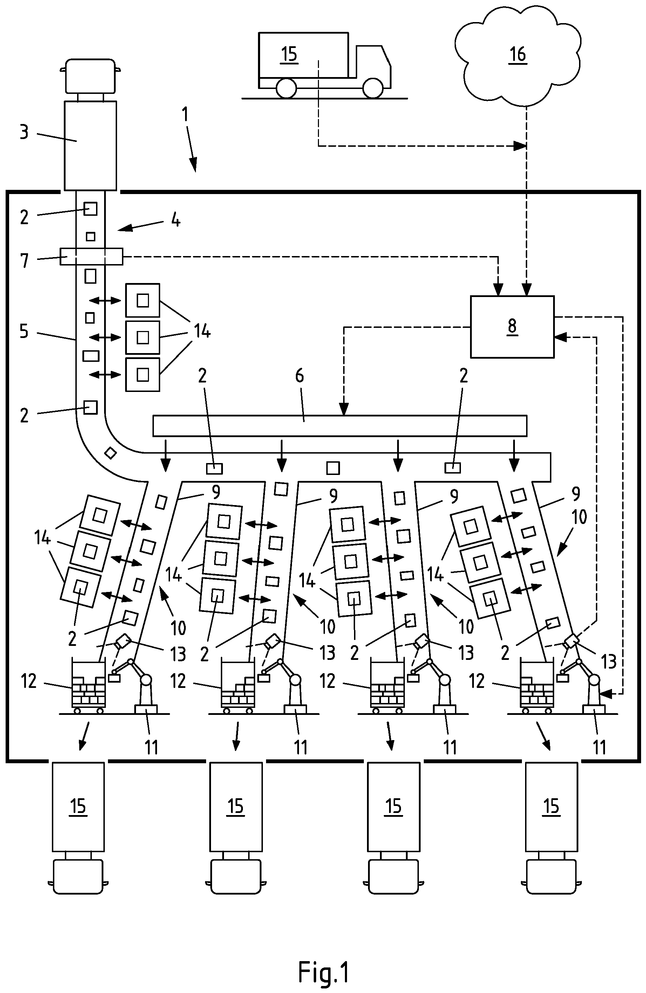

In der Fig. 1 ist eine Sortierstation 1 zum Umverteilen von Packstücken 2 dargestellt. Bei den Packstücken 2 kann es sich um Stückgüter, Pakete, Umschläge, Tüten und/oder Säcke handeln. Die Packstücke 2 werden mit Transporteinheiten 3 in Form von Nutzfahrzeugen, insbesondere Lastkraftwagen, Anhängern und/oder Sattelaufliegern an die Sortierstation 1 herangefahren, wobei sich die Packstücke 2 in den Aufbauten der Nutzfahrzeuge befinden. An der Sortierstation 1 angekommen werden die Packstücke 2 entladen und dabei vereinzelt. Beim dargestellten und insoweit bevorzugten Verfahren wird aus den entladenen Packstücken 2 eine einzige Transportreihenfolge 4 von Packstücken 2 erzeugt. Die Transportreihenfolge 4 wird, insbesondere wenigstens im Wesentlichen stetig, mit wenigstens einem Förderband 5 durch die Sortierstation 1 bis zu einer Sortiereinrichtung 6 transportiert. Bedarfsweise können auch mehrere Transportreihenfolgen 4 erzeugt werden, die dann parallel in der Sortierstation 1 gehandhabt werden können.

Die Transportreihenfolge 4 der Packstücke 2 wird einer Scanneinrichtung 7 zugeführt, in der von jedem Packstück 2 ein Sortierparameter, insbesondere eine Postleitzahl, und Größenabmessungen erfasst wird. Zudem wird das Gewicht der Packstücke 2 erfasst. Dies ist jedoch optional. Ob es sinnvoll ist, das Gewicht zu erfassen, hängt von der Art der Packstücke 2 und davon ab, wie sich die Packstücke 2 hinsichtlich ihres Gewichts unterscheiden. Bei dem dargestellten uns insoweit bevorzugten Verfahren werden die Packstücke 2 durch einen Sechsseiten-Scanner der Scanneinrichtung 7 transportiert, wobei die Packstücke 2 jeweils von allen sechs Seiten gescannt werden. Es wird dabei eine Zielinformation wie eine Postleitzahl ausgelesen, die für das anschließende Sortieren der Packstücke 2 als Sortierparameter relevant ist. Es werden auch die Größenabmessungen Länge, Höhe und Breite, sowie die Form der Packstücke 2 erfasst. Zudem wird bei Durchtritt durch die Scanneinrichtung 7 das Gewicht der Packstücke 2 ermittelt, sofern dies zweckmäßig erscheint.

Die Reihenfolge der Packstücke 2, die den Packstücken 2 zugeordneten Sortierparameter, die Größenabmessungen, die Formen und Gewichte werden an eine Steuereinrichtung 8 übermittelt. Die Packstücke 2 werden von der Scanneinrichtung 7 zur Sortiereinrichtung 6 transportiert, wo die Packstücke 2 entsprechend des Sortierparameters auf unterschiedliche Förderbänder 9 verteilt werden. Dies erfolgt gesteuert durch die Steuereinrichtung 8 anhand der Transportreihenfolge 4 der Packstücke 2 und den der Packstücke 2 zugeordneten Sortierparametern. Zum Sortieren der Packstücke 2 können diese zunächst der Transportreihenfolge 4 nach auf Wippen überführt werden, welche die Packstücke 2 an den weiteren Förderbändern 9 vorbei transportieren und die Packstücke 2 jeweils nach den Sortierparametern auf die den Sortierparametern zugewiesenen Förderbänder 9 kippen. Alternativ können die Packstücke 2 auch aktiv von der Sortiereinrichtung 6 auf die dem Sortierparameter zugeordneten Förderbänder 9 verschoben werden. Andere Arten des Sortierens sind ebenfalls möglich und bekannt. Auf den sich an die Sortiereinrichtung 6 anschließenden Förderbändern 9 bilden sich Sortierreihenfolgen 10 der Packstücke 2 aus, die sich aus der Transportreihenfolge 4 der Packstücke 2 vor der Sortiereinrichtung 6 und der Zuordnung der Sortierparameter zu den Packstücken 2 der Transportreihenfolge 4 ergibt.

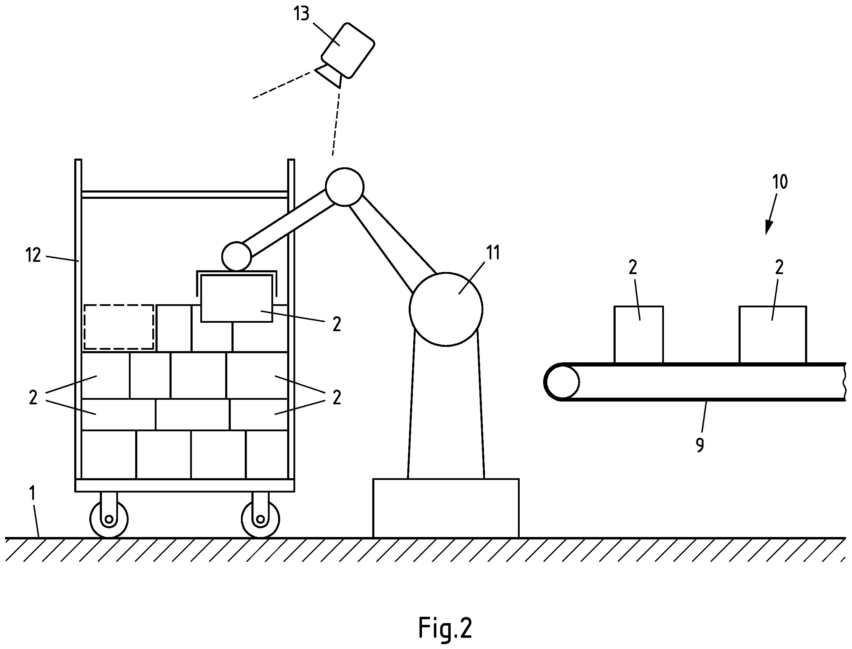

Die Sortierreihenfolgen 10 der Packstücke 2 werden, wie dies in der Fig. 2 dargestellt ist, ihrer Reihenfolge entsprechend von Robotern 11 in Transporteinheiten 12 in Form von Rollwagen verladen, die dann ihrerseits in Aufbauten von Nutzfahrzeugen wie Lastkraftwagen, Anhängern oder Sattelaufliegern verladen werden können. Die Steuereinrichtung 8 weist die Roboter 11 an, an welcher Stelle die Packtücke 2 jeweils in den Transporteinheiten 12 zu platzieren sind, um die Ladekapazität der Transporteinheiten 12 gut ausnutzen zu können. Dies ist durch die durch eine gestrichelte Linie hervorgehobene Lücke in der Transporteinheit 12 zum Einlegen des nächsten Packstücks 2 schematisch dargestellt. Ungenutzte Räume der Transporteinheiten 12 zwischen den Packstücken 2 sollen möglichst vermieden oder verringert werden. Den Transporteinheiten 12 sind jeweils, insbesondere optische, Sensoren 13 zugeordnet, welche jeweils die aktuelle Beladesituation erfassen und diese an die Steuereinrichtung 8 weiterleiten. Bedarfsweise können die Sensoren 13 auch nur Aufnahmen von den Transporteinheiten 12 weiterleiten, aus denen dann die Steuereinrichtung 8 die aktuellen Beladesituationen ermittelt.

Dazu ist es nicht nur hilfreich, die Packstücke 2 der Reihe nach jeweils an eine geeignete Stelle in den Transporteinheiten 12 zu verladen, sondern auch die Reihenfolge der Packstücke 2 so zu beeinflussen, dass möglichst die nachfolgenden Packstücke 2 unter Berücksichtigung der bereits verladenen Packstücke 2, mithin in Abhängigkeit der jeweiligen Beladesituation, so gewählt sind, dass für jedes Packstück 2 eine platzsparende Verladung möglich ist. Ob ein Packstück 2 platzsparend verladen werden kann, hängt nicht bloß von dem Packstück 2 selbst, sondern von dem jeweils für das Verladen des Packstücks 2 zur Verfügung stehenden Platz in der Transporteinheit 12 ab. Ein Packstück 2 kann bei bestimmten Beladesituationen passgenau verladen werden. Bei anderen Beladesituationen kann dasselbe Packstück 2 aber gegebenenfalls nur so verladen werden, dass viel Raum in der Transporteinheit 12 ungenutzt bleibt.

Es werden mithin die Sortierreihenfolgen 10 der Packstücke 2 so verändert, dass die Packstücke 2 in der Sortierreihenfolge 10 platzsparender verladen werden können als ohne die Änderung der Sortierreihenfolgen 10. Die bewusst geänderten Sortierreihenfolgen 10 werden auch als optimierte Sortierreihenfolgen 10 bezeichnet. Das Ändern der Sortierreihenfolgen 10 kann auf unterschiedliche Weisen erfolgen. Es wäre wünschenswert, wenn ein absolutes Optimum in Bezug auf die Sortierreihenfolge 10 erreicht würde. Dies ist aber nicht erforderlich und in vielen Fällen mit vertretbarem Aufwand auch kaum zu erreichen.

Die Änderung der Sortierreihenfolgen 10 kann erfolgen, indem nach dem Sortieren der Packstücke 2 aus der sich dabei ergebenden vorläufigen Sortierreihenfolge 10 einzelne Packstücke 2 ausgeschleust und an anderer Stelle wieder in die Sortierreihenfolge 10 eingeschleust werden. Bei der dargestellten und insoweit bevorzugten Sortierstation 1 sind dazu neben den auf Förderbändern 9 zu den Robotern 11 geförderten Sortierreihenfolgen 10 Aufnahmeplätze 14 zur zeitweisen Aufnahme von Packstücken 2 vorgesehen. Bestimmte Packstücke 2 können auf die Aufnahmeplätze 14 verschoben und damit aus der vorläufigen Sortierreihenfolge 10 ausgeschleust werden. Von den Aufnahmeplätzen 14 können die Packstücke 2 wieder zurück in Lücken in der Sortierreihenfolge 10 eingeschleust werden, wodurch eine optimierte Sortierreihenfolge 10 gebildet wird. Zum Ausschleusen und Einschleusen der Packstücke 2 können entsprechende, nicht dargestellte, ansonsten aber bekannte Schieber vorgesehen sein. Das Ausschleusen und Einschleusen der Packstücke 2, beispielsweise also das Betätigen der entsprechenden Schieber wird von der Steuereinrichtung 8 gesteuert.

Ein alternatives oder zusätzliches Vorgehen besteht darin, dass Packstücke 2 bereits aus der vorläufigen Transportreihenfolge 4 ausgeschleust und an anderer Stelle zur Bildung einer optimierten Transportreihenfolge 4 und damit zur Bildung von optimierten Sortiereinrichtungen 10 wieder in die Transportreihenfolge 4 eingeschleust werden. Das Ausschleusen kann, wie zuvor im Zusammenhang mit den Sortierreihenfolgen 10 beschrieben, aus Aufnahmeplätzen 14 erfolgen, wo die ausgeschleusten Packstücke 2 liegen bleiben, bis sie wieder in eine Lücke der Transportreihenfolge 4 eingeschleust werden. Auch dieses Ausschleusen und Einschleusen wird durch die Steuereinrichtung 8 gesteuert. Dieser ist bekannt, nach welchen Sortierparametern die Packstücke 2 sortiert werden und welche Sortierparameter die Packstücke 2 aufweisen. Mithin kann durch eine Änderung der Transportreihenfolge 4 gezielt auf die Optimierung der Sortierreihenfolgen 10 eingewirkt werden.

Es ist nicht dargestellt, aber denkbar, dass die ausgeschleusten Packstücke 2 nicht am Ort des Ausschleusens aus der Transportreihenfolge 4 und/oder Sortierreihenfolge 10 verharren, bis die Packstücke 2 wieder in die entsprechende Transportreihenfolge 4 und/oder Sortierreihenfolge 10 eingeschleust werden. Die Packstücke 2 könnten auch mit oder entgegen der jeweiligen Förderrichtung der nicht ausgeschleusten Packstücke 2 bewegt werden um die Packstücke 2 in der Transportreihenfolge 4 und/oder Sortierreihenfolge 10 weiter vorne oder in kurzer Zeit viel weiter hinten einzuschleusen.

Die Steuereinrichtung 8 ermittelt entsprechend der Informationen, welche von der Scanneinrichtung 7 übermittelt werden, mittels eines vorgegebenen Beladealgorithmus eine geänderte Sortierreihenfolge 10, die als bevorzugt für das Beladen in den Transporteinheiten 12 erkannt wird. Die Steuereinrichtung 8 gibt gleichzeitig vor, welche Packstücke 2 an welcher Stelle ausgeschleust und welche ausgeschleusten Packstücke 2 an welcher Stelle wieder eingeschleust werden müssen, um die geänderten, optimierten Sortierreihenfolgen 10 zu erzeugen. Durch das entsprechende Ausschleusen und Einschleusen von einzelnen Packstücken 2 werden dann die vorbestimmten, von der Steuereinrichtung 8 als zweckmäßig abgeschätzten optimierten Sortierreihenfolgen 10 erzeugt.

Die Steuereinrichtung 8 kann dabei zunächst 3D-Modelle der entsprechend gescannten Packstücke 2 erzeugen, um danach den genauen Platzbedarf der Packstücke 2 im Beladungsalgorithmus bestimmen zu können. Dies bietet sich insbesondere bei unregelmäßig geformten Packstücken 2 an. Aus der Form der Packstücke 2, die von der Scanneinrichtung 7 erfasst und/oder von der Steuereinrichtung 8 ermittelt werden kann, kann auf bestimmte Artikelklassen der Packstücke 2 geschlossen werden. Solche Artikelklassen können neben den Abmessungen zusätzlich beeinflussen, wo die Packstücke 2 in den Transporteinheiten 12 verladen und wo die Packstücke 2 dafür in den Sortierreihenfolgen 10 angeordnet werden. Die Artikelart kann auch Einfluss auf die Sortierung der Packstücke 2 in der Sortierreinrichtung 6 haben. Beispielsweise können bestimmte Artikelarten in separate Sortierreihenfolgen 10 sortiert werden, auch wenn sie denselben Sortierparameter aufweisen. Bestimmte Artikelarten, also beispielsweise besonders fragile Packstücke 2, können dann in separate Transporteinheiten 12 verladen werden, bedarfsweise auch händisch.

Die Steuereinrichtung 8 kann anhand der Größenmaße der Packstücke 2 auch bestimmte Packstücke 2 bestimmten Sonderformen zuordnen und für die Sonderformen der Packstücke 2 ein besonderes Handling vorsehen. Die Sonderformen können in separate Sortierreihenfolgen 10 sortiert werden, auch wenn sie denselben Sortierparameter aufweisen, wie nicht den Sonderformen zugewiesene Packstücke 2. Packstücke 2 mit bestimmten Sonderformen lassen sich dann einfacher und platzsparender zusammen in einer gemeinsamen Transporteinheit 12 verladen, während Packstücke 2 ohne Sonderformen ihrerseits gemeinsam in einer Transporteinheit 12 verladen werden. Sonderformen können aber auch dazu führen, dass die Packstücke 2 in bestimmten Ausrichtungen und/oder an bestimmten Stellen in den Transporteinheiten 12 verladen werden sollten. Auch dann wären die Sortierreihenfolgen 10 gegebenenfalls entsprechend zu ändern, um diese Verladung zu ermöglichen.

Die Steuereinrichtung 8 kann bei der Vorgabe der optimierten Sortierreihenfolgen 10 auch das Gewicht der Packstücke 2 berücksichtigen. Es kann sich beispielsweise anbieten, wenn besonders schwere und zugleich recht kleine Packstücke 2 unten in der Transporteinheit 12 verladen werden. Diese Packstücke 2 müssen mithin so in der Sortierreihenfolge 10 angeordnet sein, dass sie zum Verladen anstehen, wenn die Transporteinheit 12 noch recht leer ist. Die Steuervorrichtung 8 kann aber auch vorsehen, dass besonders schwere Packstücke 2 an einer anderen Stelle in der Sortiereinrichtung 6 aussortiert werden als die weniger schweren Packstücke 2 mit gleichem Sortierparameter. Dann können diese separat in separate Transporteinheiten 12 verladen werden, wo sie die leichteren, in andere Transporteinheiten 12 verladenen Packstücke 2 nicht beschädigen können. Die schweren, separat zu verladenden Packstücke 2 können ihrerseits aber aufgrund ihrer Abmessungen wiederum untereinander in einer optimierten Sortierreihenfolge 10 angeordnet werden, und zwar unter Anwendung der vorstehend bereits beschriebenen Maßnahmen.

Denkbar ist es auch, dass die Packstücke 2 der Aufbauten der in der Sortierstation 1 zu entladenden Nutzfahrzeuge 15 bereits vor dem Verladen in die Aufbauten gescannt worden sind. Dann sind deren Größenmaße, Gewichte, Formen und/oder Sortierparameter bekannt. Es kann auch bekannt sein, wo in etwa die Packstücke 2 in die Aufbauten verladen worden sind, so dass man abschätzen kann, wann die Packstücke 2 in der Sortierstation 1 wieder entladen werden. Diese Informationen können der Steuereinrichtung 8 bereits vor dem Entladen der entsprechenden Packstücke 2 mitgeteilt werden. Die Information kann dabei direkt vom Ort der Beladung, einem zwischengeschalteten Server oder einer Zentraleinheit 16 gesendet werden. Dann kann zusätzlich das entsprechende Nutzfahrzeug 15, etwa von unterwegs, der Steuereinrichtung 8 mitteilen, wann es schätzungsweise an der Sortierstation 1 eintreffen wird. Das Nutzfahrzeug 15 kann bedarfsweise auch die Informationen über die geladenen Packstücke 2 übermitteln.

Wenn die Steuereinrichtung 8 Informationen über die bald zu sortierenden Packstücke 2 erhält, kann die Steuereinrichtung 8 mittels eines vorgegebenen Beladealgorithmus abschätzen, welche optimierten Sortierreihenfolgen 10 eine gute Raumausnutzung in den Transporteinheiten 12 versprechen und einfach bereitzustellen sind. Nach dem Scannen der Packstücke 2 in der Scanneinrichtung 7 können dann die Schätzungen betreffend die Reihenfolgen der Packstücke 2 mit der tatsächlichen Transportreihenfolge 4 abgeglichen werden. Dann kann eine weitere Anpassung der Berechnung der optimierten Sortierreihenfolgen 10 erfolgen.

### Bezugszeichenliste

- 1: Sortierstation
- 2: Packstück
- 3: Transporteinheit
- 4: Transportreihenfolge
- 5: Förderband
- 6: Sortiereinrichtung
- 7: Scanneinrichtung
- 8: Steuereinrichtung
- 9: Förderband
- 10: Sortierreihenfolge
- 11: Roboter
- 12: Transporteinheit
- 13: Sensor
- 14: Aufnahmeplatz
- 15: Nutzfahrzeug
- 16: Zentraleinheit

## Patentansprüche

1. Verfahren zum Umverteilen von Packstücken (2) in einer Sortierstation (1),
- bei dem die Packstücke (2) gebündelt in separaten Transporteinheiten (3) an der Sortierstation (1) angeliefert, in der Sortierstation (1) entladen und wenigstens in einer Transportreihenfolge (4) nacheinander an eine Scanneinrichtung (7) transportiert werden,
- bei dem die Packstücke (2) der wenigstens einen Transportreihenfolge (4) zur Erfassung jeweils wenigstens eines Größenmaßes und jeweils wenigstens eines Sortierparameters nacheinander gemäß der wenigstens einen Transportreihenfolge (4) gescannt werden,
- bei dem die gescannten Packstücke (2) in der wenigstens einen Transportreihenfolge (4) in einer Sortiereinrichtung (6) anhand des wenigstens einen Sortierparameters sortiert und in wenigstens zwei parallele Sortierreihenfolgen (10) von Packstücken (2) aufgeteilt werden,
- bei dem die Packstücke (2) der parallelen Sortierreihenfolgen (10) nacheinander gemäß den Sortierreihenfolgen (10) mit wenigstens einem Roboter (11) in unterschiedliche Transporteinheiten (12) verladen werden und mit den Transporteinheiten (12) aus der Sortierstation (1) abtransportiert werden,
- bei dem eine Steuereinrichtung (6) anhand der wenigstens einen Transportreihenfolge (4) und der wenigstens einen Sortierparameter der Packstücke (2) der wenigstens einen Transportreihenfolge (4) wenigstens zwei parallele, theoretische Sortierreihenfolgen (10) ermittelt,
- bei dem die Steuereinrichtung (8) anhand der theoretischen Sortierreihenfolgen (10), anhand des wenigstens einen Größenmaßes der Packstücke (2) der theoretischen Sortierreihenfolgen (10) und anhand eines Beladealgorithmus platzsparender nacheinander in die Transporteinheiten (12) zu verladende, optimierte Sortierreihenfolgen (10) ermittelt,
- bei dem nur einzelne Packstücke (2) aus der Transportreihenfolge (4) und/oder den Sortierreihenfolgen (10) ausgeschleust und zur Bildung der durch die Steuereinrichtung (8) ermittelten, optimierten Sortierreihenfolgen (10) an anderer Stelle in die Transportreihenfolge (4) und/oder Sortierreihenfolgen (10) wieder eingeschleust werden und
- bei dem die Packstücke (2) gemäß den optimierten Sortierreihenfolgen (10) vom wenigstens einen Roboter in die Transporteinheiten (12) verladen werden.

2. Verfahren nach Anspruch 1,
- bei dem die Packstücke (2) in wenigstens einer vorläufigen Transportreihenfolge (4) gescannt werden,
- bei dem nur einzelne Packstücke (2) aus der Transportreihenfolge (4) ausgeschleust und zur Bildung der durch die Steuereinrichtung (8) ermittelten, optimierten Transportreihenfolge (4) wieder eingeschleust werden und
- bei dem die Packstücke (2) der optimierten Transportreihenfolge (4) in einer Sortiereinrichtung (6) anhand des wenigstens einen Sortierparameters in wenigstens zwei, vorzugsweise optimierte, Sortierreihenfolgen (10) sortiert werden.

3. Verfahren nach Anspruch 1,
- bei dem die Packstücke (2) der Transportreihenfolge (4) in wenigstens einer vorläufigen Transportreihenfolge (4) in einer Sortiereinrichtung (6) anhand des wenigstens einen Sortierparameters in wenigstens zwei vorläufige Sortierreihenfolgen (10) sortiert werden und
- bei dem nur einzelne Packstücke (2) aus den vorläufigen Sortierreihenfolgen (10) ausgeschleust und zur Bildung der durch die Steuereinrichtung (8) ermittelten, optimierten Sortierreihenfolgen (10) an anderer Stelle in die Sortierreihenfolgen (10) wieder eingeschleust werden.

4. Verfahren nach einem der Ansprüche 1 bis 3,
- bei dem der Beladezustand der wenigstens einen Transporteinheit (12) zum Verladen der Packstücke (2) während des Verladens der Packstücke (2) mittels wenigstens eines, insbesondere optischen, Sensors (13) überwacht wird und
- bei dem die Steuereinrichtung (8) die optimierte Sortierreihenfolge (10) anhand des über den wenigstens einen Sensor (13) erfassten Beladezustands wenigstens einer Transporteinheit (12) ermittelt wird.

5. Verfahren nach einem der Ansprüche 1 bis 4,
- bei dem der wenigstens eine Größenparameter der Packstücke (2) mittels eines Sechsseiten-Scanners, eines Linienscanners, insbesondere eines RGB-Linienscanners, und/oder eines Volumenscanners gescannt wird.

6. Verfahren nach einem der Ansprüche 1 bis 5,
- bei dem wenigstens zwei, insbesondere wenigstens drei, Größenparameter von jedem Packstück (2) gescannt werden und/oder
- bei dem die, insbesondere maximale, Höhe, die, insbesondere maximale, Länge und die, insbesondere maximale, Breite jedes Packstücks (2) gescannt wird.

7. Verfahren nach einem der Ansprüche 1 bis 6,
- bei dem die Form und/oder die Oberfläche der Packstücke (2), vorzugsweise mittels eines Sechsseiten-Scanners, eines Linienscanners, insbesondere eines RGB-Linienscanners, und/oder eines Volumenscanners, gescannt wird und
- bei dem, vorzugsweise, von der Steuereinrichtung (8) anhand der gescannten Form und/oder die Oberfläche der Packstücke (2) ermittelt wird, ob es sich bei der Form um wenigstens eine vorbestimmte Sonderform der Packstücke (2) handelt.

8. Verfahren nach Anspruch 7,
- bei dem die Packstücke (2) mit vorbestimmten Sonderformen aus der, insbesondere vorläufigen, Transportreihenfolge (4) und/oder aus der, insbesondere vorläufigen, Sortierreihenfolge (10) ausgeschleust werden und
- bei dem, vorzugsweise, die ausgeschleusten Packstücke (2) mit Sonderformen, vorzugsweise händisch, in wenigstens eine, insbesondere separate, Transporteinheit (12) verladen werden.

9. Verfahren nach Anspruch 7 oder 8,
- bei dem von der Steuereinrichtung (8) aus der gescannten Form und/oder die Oberfläche der Packstücke (2) elektronische 3D-Modelle der Packstücke (2) erzeugt werden und
- bei dem die Steuereinrichtung (8) auch anhand der elektronischen 3D-Modelle der Packstücke (2) platzsparende, nacheinander in die Transporteinheiten (12) zu verladende optimierte Sortierreihenfolgen (10) ermittelt.

10. Verfahren nach einem der Ansprüche 7 bis 9,
- bei dem von der Steuereinrichtung (8) aus der gescannten Form und/oder die Oberfläche der Packstücke (2) auf Artikelklassen der Packstücke (2) geschlossen wird und
- bei dem die Steuereinrichtung (8) auch anhand der Artikelklassen der Packstücke (2) platzsparende, nacheinander in die Transporteinheiten (12) zu verladende optimierte Sortierreihenfolgen (10) ermittelt.

11. Verfahren nach einem der Ansprüche 1 bis 10,
- bei dem das Gewicht bestimmter Packstücke (2), vorzugsweise jedes Packstücks (2), erfasst wird und
- bei dem die Steuereinrichtung (8) auch anhand des Gewichts der Packstücke (2) platzsparende, nacheinander in die Transporteinheiten (12) zu verladende optimierte Sortierreihenfolgen (10) ermittelt.

12. Verfahren nach einem der Ansprüche 1 bis 11,
- bei dem der Steuereinrichtung (8) vor dem Entladen der Transporteinheit (12) Größenmaße und/oder Sortierparameter wenigstens einzelner Packstücke (2) übermittelt werden und
- bei dem, vorzugsweise, die mitgeteilten Größenmaße und/oder Sortierparameter der wenigstens einzelnen Packstücke (2) mit den gescannten Größenmaßen und/oder Sortierparametern mit wenigstens einzelnen Packstücken (2) abgeglichen werden.

13. Verfahren nach Anspruch 12,
- bei dem die Steuereinrichtung (8) anhand der übermittelten Größenmaße und/oder Sortierparameter wenigstens einzelner Packstücke (2), insbesondere vor dem Entladen der wenigstens einzelnen Packstücke (2), eine optimierte Sortierreihenfolge (10) der wenigstens einzelnen Packstücke (2) ermittelt und
- bei dem, vorzugsweise, von der Steuereinrichtung (8) die optimierte Sortierreihenfolge (10) der Packstücke (2) nach dem Scannen der Packstücke (2) unter Berücksichtigung der vor dem Scannen der Packstücke (2) anhand der übermittelten Größenmaße und/oder Sortierparameter theoretisch ermittelten optimierten Sortierreihenfolge (10) ermittelt wird.

14. Verfahren nach einem der Ansprüche 1 bis 13,
- bei dem die Packstücke (2) aus Transporteinheiten (12) in Form von Nutzfahrzeugaufbauten, vorzugsweise Kofferaufbauten, insbesondere eines Lastkraftwagens, Anhängers oder Sattelaufliegers und/oder aus Transporteinheiten (12) in Form von nicht selbst angetriebenen Niederflurfahrzeugen, insbesondere in Form von Rollwagen, Gitterboxen oder ULD entladen werden und/oder
- bei dem die Packstücke (2) in nicht selbst angetriebene Niederflurfahrzeuge, insbesondere in Form von Rollwagen, Gitterboxen oder ULD verladen werden.

15. Verfahren nach einem der Ansprüche 1 bis 14
- bei dem als Packstücke (2) umverpackte Stückgüter (2), insbesondere jeweils mit einem Karton umverpackte Stückgüter verwendet werden und
- bei dem, vorzugsweise, die Stückgüter Pakete sind.
